# EUROPEAN PATENT APPLICATION

(11) **EP 4 120 165 A1**
(43) Date of publication of application: **18.01.2023**
(21) Application number: 21306002.3
(22) Date of filing: 16.07.2021
(51) Int. Cl.: G06Q 20/32, G06Q 20/34, G06Q 20/38, H04L 29/06

(54) **METHOD FOR MANAGING A SMART CARD**

(71) Applicant: Thales DIS France SA, 92190 Meudon (FR)
(72) Inventor: DALISTAN, Maria Louella Young, 92190 MEUDON (FR); BHOGUNUVA JEYAPRAKSH, Viswa Rubini, 92190 MEUDON (FR); FAVREAU, Valentin, 92190 MEUDON (FR)
(74) Representative: Grevin, Emmanuel

(57) **Abstract**

The invention is a method for managing a smart card (10) comprising the steps in which the smart card:
- Following receipt of a first applicative command (91) originated from a terminal (90), establishes a contactless communication channel (41) with a portable apparatus (40),
- Upon receipt of a second applicative command (92) comprising a set of transaction parameters, sends a request (71) comprising at least one transaction parameter to the portable apparatus,
- Receives a One-Time Password (81) in response to the request,
- Performs a verification of the OTP, and only in case of successful verification generates a message (73) comprising a specific right reflecting a successful authentication of the user by the smart card, then sends the message in response to the second applicative command.

## Description

### (Field of the invention)

The present invention relates to methods for managing a smart card. It relates particularly to methods of managing a smart card involved in an applicative transaction with a terminal.

### (Background of the invention)

Smart cards are portable small devices comprising a memory, a processor unit and an operating system for computing treatments. They may comprise services applications like payment or telecom applications. Such secure elements may comprise a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components. In general, smartcards have limited computing resources and limited memory resources and they are intended to connect a host machine which may provide them with electric power either in contact mode or contactless mode.

A smart card may participate to an applicative transaction for providing a connected terminal with an authorization to conduct the transaction. For example, the applicative transaction may be a cash withdrawal performed at an ATM) or a payment carried out to a Point-Of-Sale (POS) terminal. The generation or delivery of the authorization is controlled by a security mechanism. Usually, the security mechanism implies the authentication of the cardholder. For instance, the user may be authenticated through a secret code like a PIN code for instance. Unfortunately, secret codes are vulnerable to theft when users type their PIN code in public areas, for example on an automatic Teller Machine (ATM) or in retail shops when doing purchases.

There is need to enhance the security mechanism that controls generation or delivery of the transaction authorization provided by a card.

### (Summary of the Invention)

The invention aims at solving the above mentioned technical problem.

An object of the present invention is a method for managing a smart card. The method comprises the steps in which the smart card:
- Following receipt of a first applicative command originated from a terminal, establishes a contactless communication channel with a portable apparatus,
- Upon receipt of a second applicative command comprising a set of transaction parameters, sends a request comprising at least one transaction parameter of the set to the portable apparatus,
- Receives a One-Time Password in response to the request, and
- Performs a verification of the One-Time Password, and only in case of successful verification generates a
message comprising a specific right reflecting a successful authentication of the user by the smart card, then sends the message in response to the second applicative command.

Advantageously, the portable apparatus may generate the One-Time Password from said at least one transaction parameter.

Advantageously, the portable apparatus may send a second request comprising said at least one transaction parameter to a remote server and receive the One-Time Password from the remote server.

Advantageously, the portable apparatus may send the One-Time Password to the smart card only if the user has given consent to the portable apparatus.

Advantageously, the portable apparatus may automatically send the One-Time Password to the smart card as soon as the One-Time Password is available in the portable apparatus.

Advantageously, upon receipt of a third applicative command comprising a group of transaction elements, the smart card may send a second message comprising at least one transaction element of said group to the portable apparatus which in turn may provide the user with said at least one transaction element.

Advantageously, said first and second applicative commands may belong to a payment transaction, said terminal may be a point of sale terminal and one transaction parameter of said set may be an amount of the payment transaction.

Advantageously, the second applicative command may be the Get Processing Options command complying with EMV^{®} Integrated Circuit Card Specifications for Payment Systems, Version 4.3.

Another object of the present invention is a smart card configured:
- Following receipt of a first applicative command originated from a terminal, to establish a contactless communication channel with a portable apparatus,
- Upon receipt of a second applicative command comprising a set of transaction parameters, to send a request comprising at least one transaction parameter of the set to the portable apparatus,
- To receive a One-Time Password in response to the request,
- To perform a verification of the One-Time Password, and only in case of successful verification to generate a message comprising a specific right reflecting a successful authentication of the user by the smart card, then to send the message in response to the second applicative command.

Advantageously, the smart card may be configured to get a current date from either the terminal or the portable apparatus and to perform the verification of the One-Time Password by using the current date.

Advantageously, the second applicative command may be the Get Processing Options command complying with EMV^{®} Integrated Circuit Card Specifications for Payment Systems, Version 4.3

Another object of the present invention is a system comprising a portable apparatus and a smart card according to the invention. The portable apparatus is configured to either generate the One-Time Password or retrieve said One-Time Password from a remote server.

Advantageously, the portable apparatus may be configured to send the One-Time Password to the smart card only if the user has given consent to the portable apparatus.

Advantageously, the portable apparatus may be configured to automatically send the One-Time Password to the smart card as soon as the One-Time Password is available in the portable apparatus.

Advantageously, the smart card and the portable apparatus may be configured to communicate through a Bluetooth Low Energy channel.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows an exemplary flow diagram for managing a smart card according to an example of the invention, and
- Figure 2 shows a diagram of architecture of a system comprising a smart card and a portable apparatus according to an example of the invention.

### (Detailed description of the preferred embodiments)

The invention may apply to any type of smart card associated to a user and intended to contribute to a transaction. The smart card may be a bank smart card, an identity document or an access badge for instance.

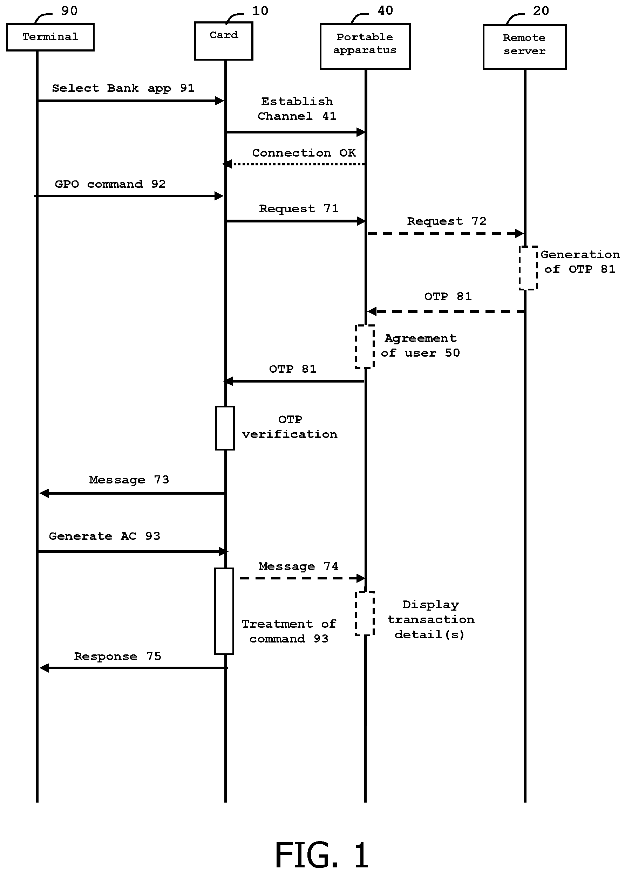

Figure 1 shows a first exemplary flow diagram for managing a smart card 10 according to an example of the invention.

In this example, the smart card 10 is a banking card intended to be used by its associated user (i.e. bank customer) for payment transaction or cash withdrawal.

The bank smart card 10 embeds a secure element comprising a hardware processing unit, a memory storing an operating system and a banking application designed to contribute to bank services.

At a first step, a payment terminal 90 may send to the smart card 10 a first applicative command 91 for starting a transaction. Preferably, the first applicative command 91 is a Selection command intended to select the relevant Banking application into the card 10. Such a Selection command may be treated by the operating system of the card. The payment terminal 90 may be a Point-Of-Sale (POS) terminal.

Following receipt of a first applicative command 91 originated from a terminal 90, the smart card 10 may start establishment of a contactless communication channel 41 with a portable apparatus 40. The portable apparatus may send an acknowledgment or a conventional handshake may be performed between both entities.

Preferably, the portable apparatus is a smartphone associated to the cardholder (i.e. card user). The contactless communication channel 41 may rely on BLE (Bluetooth Low Energy), Wi-Fi or UWB (Ultra-Wideband) technology for instance. Data exchanged through the contactless communication channel 41 may be secured by using a conventional cryptographic mechanism based on secret or keys pre-stored in the portable apparatus and the smart card.

The smart card 10 and the portable apparatus 40 may have been paired during a previous phase so that each of them stores an identifier of the other device.

Then the payment terminal 90 may send to the smart card 10 a second applicative command 92 comprising a set of transaction parameters and requiring the smart card to authenticate the user. In a preferred embodiment, the second applicative command 92 is the Get Processing Options as defined by EMV^{®} Integrated Circuit Card Specifications for Payment Systems, Version 4.3 for instance. The transaction parameters may include a transaction amount, a currency code, a transaction type or terminal capabilities for instance.

Following receipt of the second applicative command 92 originated from the terminal 90, the smart card 10 may start establishment of a contactless communication channel 41 with a portable apparatus 40 if not already done.

Upon receipt of the second applicative command 92, the card 10 sends a request 71 to the portable apparatus in order to request a One-Time-Password. The request 71 comprises at least one transaction parameter of the set of received transaction parameters. In turn, the portable apparatus gets a One-Time-Password 81 and sends it back to the card in response to the request 71.

In one embodiment, the portable apparatus 40 may generate the One-Time Password 81 from the received transaction parameter(s).

In one embodiment, the portable apparatus 40 may send a second request 72 comprising at least one transaction parameter to a remote server 20. The remote server 20 may identify the One-Time Password 81 and send it back to the portable apparatus in response to the request 72. The remote server 20 may be a bank server configured to generate (or retrieve from a pre-populated data base) a relevant OTP. The portable apparatus 40 and the remote server may exchange data through a communication channel relying on a network which may include a Telecom network, the Internet and a private network. Data exchanged through the communication channel may be secured by using a conventional cryptographic mechanism based on secret or keys pre-stored in the portable apparatus and the remote server.

In one embodiment, the portable apparatus 40 may automatically send the One-Time Password 81 to the smart card as soon as the One-Time Password becomes available in the portable apparatus.

In one embodiment, the portable apparatus 40 may send the One-Time Password 81 to the smart card only if the card user has given consent to the portable apparatus. For example, the user may be prompted to confirm the OTP sending through a display on the portable apparatus.

Then the card 10 performs a verification of the received One-Time Password 81, and only in case of successful verification of the OTP, generates a message 73 (which is a response to the second applicative command) comprising a specific right reflecting a successful authentication of the user by the smart card. Then the smart card sends the message 73 to the terminal 90 in response to the second applicative command.

The message 73 may contain a Tag 87 (meaning "No CVM required") in response to the GPO command.

In case of unsuccessful verification of the OTP by the smart card, the smart card may generate a denial message whose content reflects an unsuccessful authentication of the user by the smart card. Then the smart card may send the denial message to the terminal 90 in response to the second applicative command. Alternatively, the card may request a conventional user authentication based on a PIN code for instance.

Then the payment terminal 90 may send to the smart card 10 a third applicative command 93 comprising a group of transaction elements. In a preferred embodiment, the third applicative command 93 is the Generate Application Cryptogram (Generate AC) as defined by EMV^{®} Integrated Circuit Card Specifications for Payment Systems, Version 4.3 for instance. Upon receipt of the third applicative command 93, the smart card may send a second message 74 comprising at least one transaction element of the received group to the portable apparatus 40 which in turn provides the user with the transmitted transaction element(s). Thus transaction details (i.e. transaction elements) may be provided to the user by the portable apparatus. For instance, the amount, the date or a merchant identifier may be displayed or vocalized. Additionally, the received transaction element(s) may be stored into a memory of the portable apparatus in order to keep a record for later consultation.

The transaction elements may include a transaction amount, a transaction currency code or cryptogram information data (CDI) for instance.

Finally, the card may send a response 75 to the third applicative command 93 so that the terminal may pursue the transaction.

The transaction may be a payment transaction having one or more parameters like the amount, a date, a place or a currency for example. The transaction may be a request for accessing a physical area (e.g. a room or a building) having one or more parameters like the security level of area, a date, an identifier of the area or an identifier of the user for example.

It should be noted that if the contactless communication channel 41 cannot be established between the smart card 10 and the portable apparatus 40 or if the portable apparatus 40 does not send an OTP, the card may behave as a conventional card which requires a PIN to be entered on the terminal to authenticate the user.

It is to be noted that additional commands may be send by the terminal to the smart card at different stages. For example the terminal may send a command for selecting a specific applet in the card before selecting the targeted payment application. The terminal may also send one or more Read commands to the card for retrieving context data specific to the card or to the transaction, like the cardholder name, an application Primary Account Number (PAN), an expiration date or a version number for example.

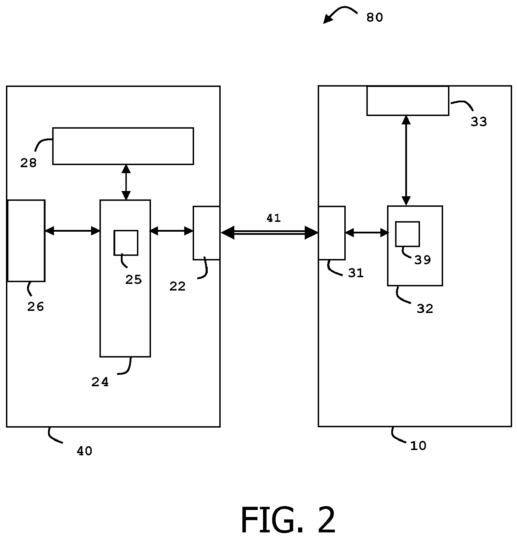

Figure 2 shows a diagram of architecture of a system 80 comprising a smart card 10 and a portable apparatus 40 according to an example of the invention.

In this example, the smart card 10 is a banking card which comprises a secure chip 32 (also called secure element), a first communication interface 33 and a second communication interface 31 configured to communicate with a portable apparatus 40 through a contactless protocol. The second communication interface 31 include an antenna and may comply with BLE protocol for instance.

The first communication interface 33 may be configured to communicate in contact mode (through ISO/IEC7816 T=0 or T=1 protocols for instance) with a terminal and include contact pads. Alternatively, the first communication interface 33 may be configured to communicate in contactless mode. (Through ISO/IEC 14443 protocols for example)

The secure element 32 comprises a processor and a non-volatile memory (not shown). In one embodiment, the non-volatile memory stores software instructions which are executed by the processor to perform the functions of the secure element. In one embodiment, the functions of the secure element 32 may be implemented as pure hardware solution or a combination of firmware and hardware.

The secure element 32 may store a keyset 39 and be configured to secure messages exchanged with a connected terminal (or the portable apparatus) by using the keyset and appropriate cryptographic algorithm(s).

Following receipt of a first applicative command 91 (which may be a Select Payment application command) originated from a connected terminal (like a POS terminal for instance), the card is configured to automatically establish a contactless communication channel 41 with the portable apparatus 40.

Upon receipt of a second applicative command 92 (which may be Get Processing Option) comprising a set of transaction parameters, the card is configured to send a request 71 comprising at least one transaction parameter to the portable apparatus.

The card is configured to receive a One-Time Password 81 from the portable apparatus in response to the request 71 and to perform a verification of validity of the One-Time Password. The card is configured to generate a message 73 comprising a specific right reflecting a successful authentication of the user by the smart card only in case of successful verification of the OTP. The card is configured to send the generated message 73 to the terminal in response to the second applicative command.

The smart card may be configured to get a current date from either the connected terminal or the portable apparatus 40 and to perform the verification of the One-Time Password by using the retrieved current date. Thus if the OTP is a time-based OTP (i.e. an OTP having a limited validity duration), the card may be able to check the received OTP is valid.

The portable apparatus 40 comprises a communication interface 22 which is capable of communicating with the smart card in contactless mode. Preferably, the communication interface 22 is configured to communicate by using BLE technology.

The portable apparatus 40 may comprise a user output interface 28 like a display or a speaker.

The portable apparatus 40 may comprise a user input interface 26 like a keyboard, a set of button (s) or a digital keyboard managed through a touchscreen.

The portable apparatus 40 may comprise a card manager 24 configured to manage requests coming from the smart card 10 and to prepare and send commands or data to the smart card 10 through the contactless channel 41. The card manager 24 may store a key 25 dedicated to securing contactless communication with the smart card 10. The card manager 24 may be configured to encipher or sign data exchanged with the smart card using the key 25.

The card manager 24 may be configured to generate a One-Time Password 81 based on the data received from the smart card. The card manager may be configured to ask user's agreement before generating the OTP 81.

The portable apparatus 40 may comprise another communication interface (not shown) which is capable of communicating with a remote server 20. The card manager 24 may be configured to generate a request 72 aiming at requesting an OTP from the remote server.

For instance, the portable apparatus 40 may be a phone configured to exchange data with a bank remote server by sending messages through a Telecom network. In another example, the portable apparatus 40 may be a tablet configured to exchange data with a bank remote server by sending messages through a combination of Wi-Fi channel and the Internet.

The card manager 24 may be configured to automatically send the OTP to the smart card as soon as the OTP is made available at the portable apparatus 40 side. The card manager 24 may be configured to send the OTP to the smart card only if the user has given consent to the portable apparatus.

The invention is not limited to the described embodiments or examples. In particular, the described examples and embodiments may be combined.

The invention is not limited to Banking smart cards and applies to any smart cards allocated to a user. The smart card 10 may be an access badge allowing to access a specific logical area (E.g. storing digital data). The smart card 10 may be an identity document which may be used in a transaction where identity of the cardholder is taken into account.

Thanks to some embodiments of the invention, the smart card may save time by automatically sending the message 73 in response to the second applicative command with limited (or even no) action of the user. In particular, the cardholder may be dispensed from typing their PIN code. Thus, the transaction processing can be speeded up for better user experience. It is to be noted that the user authentication is replaced by the checking of validity of an OTP provided to the card by another physical device which is distinct from the terminal involved in the transaction.

Thanks to some embodiments of the invention, the card user no longer has the obligation to memorize and remember the correct secret code value (i.e. PIN code) corresponding to their smart card. This particularly advantageous when the user has a plurality of smart cards.

It is to be noted that the invention applies to any smart cards having a form factor different from a conventional smart card. For example, the invention may apply to wearable devices like a bracelet or a key ring.

## Claims

1. A method for managing a smart card (10), **characterized in that** the method comprises the steps in which the smart card:
- Following receipt of a first applicative command (91) originated from a terminal (90), establishes a contactless communication channel (41) with a portable apparatus (40),
- Upon receipt of a second applicative command (92) comprising a set of transaction parameters, sends a request (71) comprising at least one transaction parameter of the set to the portable apparatus,
- Receives a One-Time Password (81) in response to the request,
- Performs a verification of the One-Time Password, and only in case of successful verification generates a message (73) comprising a specific right reflecting a successful authentication of the user by the smart card, then sends the message in response to the second applicative command.

2. The method according to claim 1, wherein the portable apparatus (40) generates said One-Time Password (81) from said at least one transaction parameter.

3. The method according to claim 1, wherein the portable apparatus (40) sends a second request (72) comprising said at least one transaction parameter to a remote server (20) and receives said One-Time Password (81) from said remote server.

4. The method according to claim 1, wherein the portable apparatus (40) sends the One-Time Password (81) to the smart card only if the user has given consent to the portable apparatus.

5. The method according to claim 1, wherein the portable apparatus (40) automatically sends the One-Time Password (81) to the smart card as soon as the One-Time Password is available in the portable apparatus.

6. The method according to claim 1, wherein upon receipt of a third applicative command (93) comprising a group of transaction elements, the smart card sends a second message (74) comprising at least one transaction element of said group to the portable apparatus which in turn provides the user with said at least one transaction element.

7. The method according to claim 1, wherein said first and second applicative commands belong to a payment transaction, wherein said terminal is a point of sale terminal and wherein one transaction parameter of said set is an amount of the payment transaction.

8. The method according to claim 1 or 7, wherein said second applicative command (92) is the Get Processing Options command complying with EMV^{®} Integrated Circuit Card Specifications for Payment Systems, Version 4.3.

9. A smart card (10),
**characterized in that** smart card is configured:
- Following receipt of a first applicative command (91) originated from a terminal (90), to establish a contactless communication channel (41) with a portable apparatus (40),
- Upon receipt of a second applicative command (92) comprising a set of transaction parameters, to send a request (71) comprising at least one transaction parameter of the set to the portable apparatus,
- To receive a One-Time Password (81) in response to the request,
- To perform a verification of the One-Time Password, and only in case of successful verification to generate a message (73) comprising a specific right reflecting a successful authentication of the user by the smart card, then to send the message in response to the second applicative command.

10. The smart card according to claim 9, wherein said smart card is configured to get a current date from either the terminal or the portable apparatus and to perform the verification of the One-Time Password by using the current date.

11. The smart card according to claim 9, wherein said second applicative command (92) is the Get Processing Options command complying with EMV^{®} Integrated Circuit Card Specifications for Payment Systems, Version 4.3

12. A system (80) comprising a portable apparatus (40) and a smart card (10) according to claim 9, wherein the portable apparatus (40) is configured to either generate said One-Time Password (81) or retrieve said One-Time Password from a remote server.

13. The system according to claim 12, wherein the portable apparatus is configured to send the One-Time Password (81) to the smart card only if the user has given consent to the portable apparatus.

14. The system according to claim 12, wherein the portable apparatus is configured to automatically send the One-Time Password (81) to the smart card as soon as the One-Time Password is available in the portable apparatus.

15. The system according to claim 12, wherein the smart card and the portable apparatus are configured to communicate through a Bluetooth Low Energy channel.
